# EUROPEAN PATENT SPECIFICATION

(11) **EP 0 485 396 B1**
(45) Date of publication and mention of the grant of the patent: **02.08.1995**
(21) Application number: 90910198.2
(22) Date of filing: 31.05.1990
(51) Int. Cl.: C08G 69/26, C08G 69/36

(54) **COPOLYMER OF DODECANE TEREPHTHALAMIDE**
COPOLYMER AUS DODECAN-TEREPHTHALAMID
Copolymère de dodécane téréphthalamide

(30) Priority: 31.07.1989 US 388182
(43) Date of publication of application: 20.05.1992
(73) Proprietor: AlliedSignal Inc., Morristown, New Jersey 07962-2245 (US)
(72) Inventor: AKKAPEDDI, Murali, Krishna, Morris Plains, NJ 07950 (US); GLANS, Jeffrey, Harper, Somerville, NJ 08876 (US)
(74) Representative: Brock, Peter William
(86) International application number: US9003030
(87) International publication number: WO9102017

(56) References cited:
- FR-A- 2 116 379
- US-A- 3 790 423
- US-A- 3 843 611
- CHEMICAL ABSTRACT, Volume 78, No. 8, 26 February 1973, (Columbus, Ohio, US),see page 64, Abstract 44934x, & JP-A-7229451

## Description

The present invention is in the field of polyamides, more particularly, the present invention relates to copolymers derived from long chain diamines, a symmetrical diacid or derivative thereof, and at least one specifically selected additional comonomer.

Conventional aliphatic nylons such as polycaprolactam (nylon 6), poly(hexamethylene adipamide) (nylon 6,6) have high melting points and are thermoplastically processable. However, they have undesirably high water absorption characteristics, absorbing from 8 to 12 wt. percent water. Water absorption causes dimensional growth, and plasticization with a significant reduction in stiffness. This makes them unsuitable for various end use applications.

Long chain aliphatic polyamides such as polylaurolactam (nylon 12), and poly(1,12-dodecamethylene dodecanamide) (nylon 12,12) have low moisture-absorbing properties, but have undesirably low melting points (below 180°C). Symmetrical rigid, aromatic diacids, such as terephthalic acid monomers used with aliphatic diamines having from 6 to 12 carbon atoms result in polyamides having low moisture absorbing characteristics but undesirably high melting points (greater than 300°C). Such melting points are often above the nylon degradation temperatures so that the polyamide cannot be melt-polymerized or melt-processed.

### SUMMARY OF THE INVENTION

The present invention is an improved polyamide copolymer derived from a long chain diamine RHN[CH₂]ₙNHR, where n is from 10 to 14, and preferably is 12 (i.e., 1,12-dodecanediamine) and R is preferably H or an alkyl carbonyl group such as 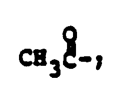
resulting in the monomer repeat unit 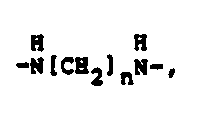
and a symmetrical diacid or derivative thereof, preferably 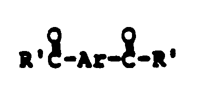
where Ar is an aromatic group, and R' is preferably -OH, alkoxy group such as -OCH₃, or a halogen, resulting in the monomer repeat unit 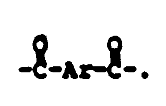
Preferably the diacid is a symmetrical aromatic dicarboxylic acid. The symmetrical aromatic diacid or derivative thereof is preferably selected from the group consisting of terephthalic acid, 2,6-naphthalene dicarboxylic acid, 4,4'-biphenyl dicarboxylic acid and dimethyl terephthalate. The copolymer has an amounts of 3 to 30 and preferably 5 to 10 mol percent, of an additional comonomer.

Useful and preferred additional comonomers include units derived from monomers which are difunctional. The functional groups are groups which are reactive with the amine groups of the diamine or the acid groups of the diacid. Preferred functional groups include amine groups, hydroxyl groups and carboxylic acid groups. Specific and preferred comonomers include lactams having up to 9 methylene groups Depending upon the comonomer, the resulting polyamide copolymer will have high crystallinity and low moisture absorption, or the additional comonomer will contribute a "soft segment" making the polyamide copolymer more flexible.

Additional comonomers which result in the improved crystallinity and low moisture absorption of the polyamide copolymer are preferably present in an amount sufficient to reduce the melting point while at the same time enable the polymer to have high crystallinity and low moisture absorption properties. Preferably, the additional comonomer results in a polyamide copolymer having relatively high crystalline melting points of preferably from 250°C to 300°C, and more preferably 270°C to 290°C, high crystallinity, preferably at least 20 percent, and low moisture absorption, preferably below 5 percent, and more preferably below 3 weight percent based on the weight of polyamide copolymer and moisture. The additional comonomer can be preferably present in random or block segments thereby resulting in a random or block copolymer. The major blocks of polyamide are derived from the long chain diamine and the symmetrical diacid. Preferred additional comonomers include diamines Preferred diamines include 4,9-dioxa-dodecane-1,12-diamine; 4,11-dioxa-tetradecane-1,14-diamine; caprolactam, and laurolactam.

Comonomers which result in a polyamide copolymer having a flexible (low glass transition temperature, Tg), hydrophobic structure include block segments selected from telechelic amine terminated polyolefins including polyethylene, poly(ethylene-propylene), polyisobutylene, poly(ethylene-butene) bis(amino alkyl)polytetramethyleneoxide (derived from polytetrahydrafuran) and poly(dimethyl siloxane); i.e., alpha,-omega-bisaminoalkyl poly(dimethyl siloxane). These comonomers have been found to act as a "soft segment" when used in the form of a block copolymer. The resulting copolymer has a combination of properties including high ductility (tensile-elongation), heat and chemical resistance, and low moisture absorption properties. They are useful for extrusion and molding applications.

### DESCRIPTION OF THE PREFERRED EMBODIMENTS

The present invention is a polyamide copolymer comprising units derived from a long chain diamine preferably RHN[CH₂]ₙNHR, where n is from 10 to 14 and preferably is 12 (i.e., 1,12-dodecanediamine); and R is preferably H or an alkyl carbonyl group such as 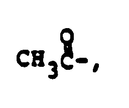
resulting in the monomer repeat unit 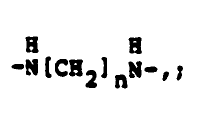
a symmetrical diacid and derivatives thereof, preferably a symmetrical aromatic diacid and derivatives thereof, preferably 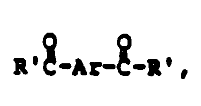
where Ar is an aromatic group, and R' is preferably -OH, alkoxy group such as -OCH₃, or a halogen resulting in the monomer repeat unit 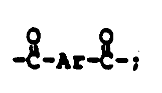
and an additional comonomer. Useful Ar's are 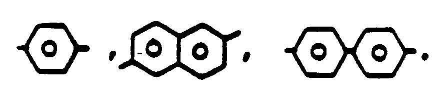
The aromatic groups can contain substituents which do not adversely affect the properties of the polyamide copolymer. The symmetrical aromatic diacid is preferably selected from the group consisting of terephthalic acid, 2,6-naphthalene dicarboxylic acid, 4,4'-biphenyl dicarboxylic acid and dimethyl terephthalate. The preferred polyamide copolymer has units derived from 1,12-dodecanediamine copolymerized with a terephthalic acid and the additional comonomer. The copolymer comprises from 35 to 48.5 mol, and preferably 40 to 45 mol percent of units derived from the long chain diamine preferably dodecanediamine, from 35 to 48.5, and preferably from 40 to 45 mol percent of units derived from terephthalic acid or derivatives thereof. Additionally, the copolymer comprises from 3 to 30, and preferably from 5 to 10 mol percent of units derived from the additional comonomer.

A preferred embodiment has units derived from at least one additional comonomer which results in a copolymer having a relatively high melting point, high crystallinity, and has low moisture absorption characteristics. The preferred polyamide copolymer has a melting point below a copolymer derived from a corresponding long chain diamine and symmetrical diacid or derivative thereof (i.e., dodecanediamine and terephthalic acid) of the same molecular weight. The melting point of the preferred polyamide copolymer is preferably in the range of from 250°C to 300°C, and more preferably 270°C to 290°C. The polyamide copolymer is highly crystalline as measured by X-ray diffraction. The polyamide copolymer is preferably at least 20 percent, and more preferably at least 30 percent. The upper range of crystallinity is typically 40 percent mol and preferably 50 percent crystalline. Additionally, the polyamide copolymer has low moisture absorption characteristics as measured according to ASTM D 570-81. Preferably the polyamide copolymer absorbs less than 5 percent by weight, and preferably less than 3 percent by weight of moisture based on the weight of the polyamide copolymer and moisture.

Additional comonomers which lead to cocrystallizable segments, or at least do not significantly reduce crystallinity are diamines such as 4,9-dioxa-1,12-diaminododecane; 4, 11-dioxa-tetradecane-1,14-diamine; laurolactam, lactams having up to 9 methylene groups, preferably caprolactam. Copolyamides made using these additional comonomers have been found to have crystalline melting points of from 270-285°C, a low water absorption character of 1.7-3 percent by weight when measured according to ASTM D 570-81, good melt processability, at or below 300°C, and satisfactory mechanical properties including strength and toughness. The copolyamides have been found to have excellent chemical resistance, particularly to aqueous zinc chloride solutions.

Additionally, the polyamide copolymers have been found to be dimensionally stable when exposed to heat and moisture, and have chemical resistance to gasoline and alcohol as well as a variety of other organic materials. This makes the copolymers of the present invention useful for a variety of high-performance engineering resin applications, such as automotive under-the-hood parts, fuel lines, and fuel component parts.

An alternate embodiment of the polyamide copolymer can include comonomer units to improve flexibility of the copolymer. Comonomers having a flexible hydrophobic structure resulting in a soft segment include the olefins present as polyolefin segments such as polyethylene, poly(ethylene-propylene), polyisobutylene, poly(ethylene-butene). A preferred ether is a polyether such as bis[aminopropyl]polytetrahydrafuran (derived from polytetramethyleneoxide); alpha,omega-bis(aminoalkyl)poly(tetramethyleneoxide); alpha,omega-diamino polyolefins; i.e., telechelic, amino terminated polyethylene; and polysiloxanes such as poly(dimethyl siloxane); i.e., alpha,omega-bisaminoalkyl poly(dimethyl siloxane). The molecular weight of the soft segments preferably range from 200 to 6,000 and more preferably from 750 to 2100. Polyethylene oxide is not preferred because of the high water absorption.

The additional comonomer preferably is derived from comonomers resulting in units having the formula 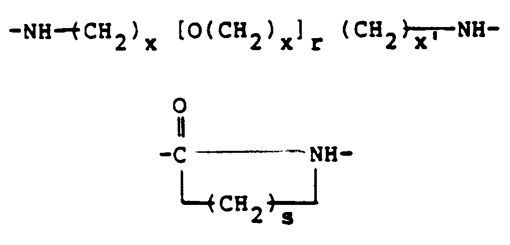
wherein
r is from 1 to 30, preferably 5 to 30,
s is from 4 to 9,
x is from 4 to 6, and
x' is from 2 to 6.

The copolymer of the present invention can be made by conventional methods to copolymerize polyamides. Particularly preferred are melt polymerization techniques in which the monomers are melted together under an inert atmosphere. The melt polymerization preferably is conducted at from 275-320°C, and more preferably from 295-320°C.

In addition to the three principal monomeric constituents, which together produce the copolymer of this invention, other polymerizable monomers can also be used to prepare copolymers. Included in these are vinyl compounds and other monomers which could be polymerized directly into a linear polymer chain. The quantity of such additional monomers can vary and can be up to 30 mol percent of the total number of polymerizable constituents but preferably is limited to quantities of less than 15 mol percent, more preferably less than 5 mol percent.

Several Examples are set forth below to illustrate the nature of the invention and the manner of carrying it out. All parts are by weight unless otherwise indicated.

### EXAMPLES

The following are Examples of copolymerizations of 1,2-dodecanediamine, terephthalic acid and the indicated additional comonomer. The copolymerizations were performed in the indicated equipment with mechanical stirring under a sweep of an inert gas (either nitrogen or argon). In each case the polymerizations were run until a significant increase in viscosity was noted and then the sample was allowed to cool. The resulting solid was broken up and ground in a Wiley® mill to produce a powder. Melting points were determined by a differential scanning calorimetry (DSC) on a Perkin-Elmer DSC 2 calorimeter. Reduced viscosities were determined by samples dissolved in m-cresol or concentrated sulfuric acid.

Samples to be tested in accordance with ASTM tests were injection molded using an Arburg® injection molding machine at 320°C and 450 (31.02 bars) psi conditions. Tensile tests were performed on molded samples according to ASTM D-638 procedures.

Water absorption measurements were performed on thin compression-molded films according to ASTM-D-570-81. Films were compression-molded at 300°C for 1 minute at 10 to 20 tons (9072 to 18144 kg) of pressure. The films were 0.1 mm thick. The films were submerged in water and their change in weight monitored until equilibrium.

Zinc chloride resistance was measured by immersing a bent 1/8 inch (0.31 cm) test bar in a 50 wt. percent solution of zinc chloride. The test bars were molded as described above, 7 inches (17.78 cm) long by 3/4 inch (1.9 cm) at the tabs, 1/4 inch (0.64 cm) in the neck region and 1/8 inch (0.317 cm) thick (ASTM-D-638 test bars). The bars were bent 180 degrees. The appearance of the bar and its structural integrity were noted with time.

### Comparative Example 1

A 0.5 L stainless steel resin kettle (wide mouth kettle) was charged with 24.4 g (122 mmol) of 1,12-dodecanediamine, 20.3 g (122 mmol) of terephthalic acid, and 40 ml of water. The reaction mixture was slowly heated to 300°C. The material was intractable and never melted out properly.

### Example 1

A 500 ml stainless steel resin kettle with a mechanical stirrer was charged with 51.1 g (0.255 mol) of 1,12-dodecanediamine, 5.79 g (0.028 mol) of 4,9-dioxadodecane-1,12-diamine, 44.9 (0.270 mol) of terephthalic acid, and 50 ml of water. The polymerization mixture was slowly heated to 320°C to give a clear viscous melt. The polymer was allowed to cool and broken up. The resulting resin was dried overnight at 110°C under vacuum.

### Example 2

A three liter glass resin kettle was charged with 540.9 (2.70 mol) of 1.12-dodecanediamine, 61.3 g (0.30 mol) of 4,9-dioxadodecane-1,12-diamine, 473.5 g (2.85 mol) of terephthalic acid and 400 ml of water. The mixture was slowly heated 300°C. The resulting viscous melt was cooled to room temperature, broken up, and dried at 100°C under vacuum overnight.

### Example 3

A three liter glass resin kettle was charged with 517.1 g (2.58 mol) of 1,12-dodecanediamine, 226.9 g (0.30 mol) of bisaminopropoxypolytetrahydrofuran 750, 456.0 g (2.74 mol) of terephthalic acid, and 400 ml of water. The mixture was slowly heated to 293°C to give a viscous melt. The melt was allowed to cool to room temperature, ground up, and dried overnight at 100°C under vacuum. This sample was unaffected by immersion in a zinc chloride solution for over one month.

### Example 4

A three liter stainless steel resin flask was charged with 336 g (1.68 mol) of 1,12-dodecanediamine, 84 g (0.112 mol) of bisaminopropoxypolytetrahydrofuran 750, 282.8 g (1.70 mol), and 250 ml of water. The mixture was slowly heated to 300°C to give a viscous melt. The reaction mass was allowed to cool to room temperature, ground up, and dried overnight at 100°C vacuum.

### Example

A 0.5 L stainless steel kettle was charged with 6.8 g (60.0 mmol) of caprolactam, 113.6 g (567 mmol) of 1,12-dodecanediamine, 89.7 g (540 mmol) of terephthalic acid and 200 ml of water. The reaction mixture was slowly heated to 300°C which resulted in a viscous melt. The resulting material was allowed to cool, broken up, and dried overnight at 110°C under vacuum.

Samples were tested for physical properties and results are summarized in Table 1 below. R.V. is relative viscosity, Tm is crystalline melt temperature.

**Table 1**

| Ex. | R.V. (deciliter/g) | Tm °C | Modulus (kpsi)/GPa | Strength (kpsi)/MPa | Elongation % | Water Absorption % |
|---|---|---|---|---|---|---|
| 1 | 1.61(*) | 274,283 | (371)/2.55 | (7.9)/54.5 | 2.3 | 3.3 |
| 2 | 0.36 | 280,293 | (303)/2.09 | (9.8)/67.6 | 27.0 | - |
| 3 | 0.31 | 274,288 | (257)/1.77 | (7.9)/54.5 | 150.0 | 3.5 |
| 4 | 0.49 | 284,293 | (276)/1.90 | (10.6)/73.0 | 117.0 | - |
| 5 | - | 289 - | - | - | - | 2.0 |

| | | | | | | |
|---|---|---|---|---|---|---|
| * measured in m-cresol | | | | | | |

## Claims

1. A polyamide copolymer consisting essentially of monomer repeat units of the formula 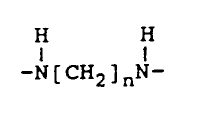 where n is from 10 to 14,
monomer repeat units of the formula 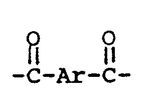 where Ar is an aromatic group selected from 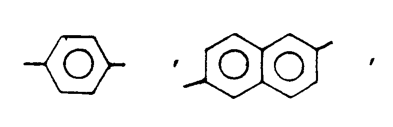 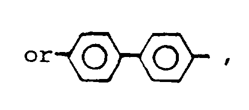 **characterized** by:
further including in amounts of 3 to 30 mole percent of the total polyamide copolymer, comonomer units selected from;
4,11-dioxa-tetradecane-1,14-diamine,
4,9-dioxa-1,12-diaminododecane,
lactams having up to 9 methylene groups, laurolactam, telechelic amine terminated polyolefins, bis(aminoalkyl)polytetramethylene oxide, and bis(aminoalkyl)poly(dimethylsiloxane).

2. The polyamide copolymer according to claim 1 further
**characterized** by:
in that monomer repeat unit of the formula 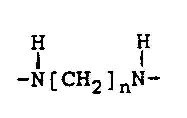 is derived from 1,12-dodecanediamine.

3. The polyamide copolymer according to Claim 1 futher
**characterized**
in that the monomer repeat groups of the formula 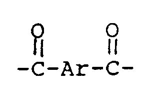 are derived from one or more of; terephthalic acid,
derivatives of terephthalic acid,
2,6-naphthalene dicarboxylic acid,
4,4'-biphenyl dicarboxylic acid, and
dimethyl terephthalate.

4. The polyamide copolymer according to Claim 1 further
**characterized** in that
the telechelic amine terminated polyolefins are at least one selected from amine terminated:
polyethylene,
poly(ethylenepropylene), and
polyisobutylene.

5. The polyamide copolymer according to any preceeding claim further
**characterized** by:
having a crystalline melting point between 250 and 300°C.

6. The polyamide copolymer according to any preceeding claim further
**characterized** by:
having a degree of crystallinity of at least 20 percent when measured by X-ray diffraction.

7. The polyamide copolymer according to any preceeding claim further
**characterized** by:
having less than 5 percent by weight water absorption when measured according to the testing standards of ASTM D 570-81.

8. The polyamide copolymer according to any proceeding claim further characterized by:
including in amounts up to 30 mol percent of the total polymerizable constituents, comonomer units selected from;
vinyl compounds, and
other monomers which could be polymerized directly into a linear polymer chain.

## Patentansprüche

1. Polyamid-Copolymer, welches im wesentlichen aus monomeren Wiederholungseinheiten der Formel 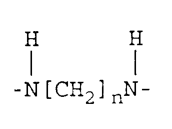 besteht, worin n von 10 bis 14 beträgt,
aus monomeren Wiederholungseinheiten der Formel 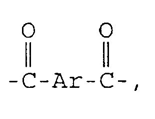 worin Ar eine aus 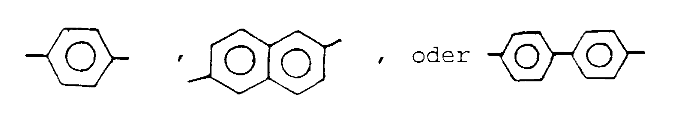 gewählte aromatische Gruppe ist,
**dadurch gekennzeichnet**, daß
es ferner Anteile von 3 bis 30 Molprozent des gesamten Polyamid-Copolymers an co-monomeren Einheiten aufweist, die aus:
4,11-Dioxa-Tetradecan-1,14-Diamin,
4,9-Dioxa-1,12-Diamino-Dodecan,
Lactamen mit bis zu 9 Methylengruppen, Laurolactam, telechelen, auf Amin endenden Polyolefinen,
bis(Aminoalkyl)-Polytetramethylenoxyd und
bis(Aminoalkyl)-Poly(Dimethylsiloxan) ausgewählt sind.

2. Polyamid-Copolymer nach Anspruch 1, welches ferner **dadurch gekennzeichnet** ist,
daß die monomere Wiederholungseinheit der Formel 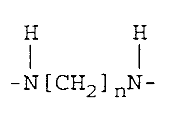 von 1,12-Dodecan-Diamin abgeleitet ist.

3. Polyamid-Copolymer nach Anspruch 1, welches ferner **dadurch gekennzeichnet** ist,
daß die monomere Wiederholungseinheiten der Formel 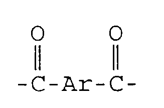 von einer oder mehreren der Verbindungen:
Terephthalsäure,
Derivaten der Terephthalsäure,
2,6-Naphthalin-Dicarbonsäure,
4,4'-Biphenyl-Dicarbonsäure und
Dimethyl-Terephthalat abgeleitet sind.

4. Polyamid-Copolymer nach Anspruch 1, welches ferner **dadurch gekennzeichnet** ist, daß
die telechelen, auf Amin endenden Polyolefine aus wenigstens einem von auf Amin endendem:
Polyäthylen,
Poly(Äthylenpropylen) und
Polyisobutylen ausgewählt sind.

5. Polyamid-Copolymer nach einem der vorhergehenden Ansprüche, welches ferner **dadurch gekennzeichnet** ist, daß einen Kristallinschmelzpunkt zwischen 250 und 300°C aufweist.

6. Polyamid-Copolymer nach einem der vorhergehenden Ansprüche, welches ferner **dadurch gekennzeichnet** ist, daß einen, mit Röntgenstrahlendiffraktion gemessenen, Kristallinitätsgrad von wenigstens 20 Prozent aufweist.

7. Polyamid-Copolymer nach einem der vorhergehenden Ansprüche, welches ferner **dadurch gekennzeichnet** ist, daß es eine, nach den Teststandards von ASTM D 570-81 gemessene, geringere Wasserabsorption als 5 Gewichtsprozent besitzt.

8. Polyamid-Copolymer nach einem der vorhergehenden Ansprüche, welches ferner **dadurch gekennzeichnet** ist, daß es Anteile von bis zu 30 Molprozent der gesamten polymerisierbaren Bestandteile an Co-Monomereinheiten aufweist, die aus:
Vinylverbindungen und anderen Monomeren ausgewählt sind, die unmittelbar zu einer linearen Polymerkette polymerisierbar sind.

## Revendications

1. Copolymère de polyamide constitué essentiellement de motifs répétitifs monomères de formule 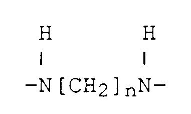 dans laquelle n est compris entre 10 et 14, de motifs répétitifs monomères de formule 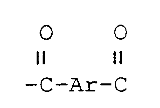 dans laquelle Ar est un groupe aromatique choisi parmi 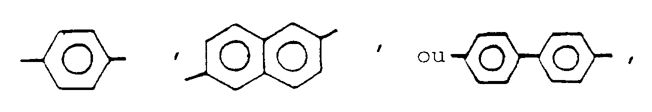 caractérisé en ce que :
il comprend en outre des quantités de 3 à 30 moles % du copolymère polyamide total, des motifs comonomères choisis parmi les :
4,11-dioxa-tétradécane-1,14-diamine,
4,9-dioxa-1,12-diaminododécane,
lactames ayant jusqu'à 9 groupes méthylène, laurolactame,
polyoléfines à terminaison amine téléchélique,
oxyde de bis(aminoalkyl)polytétraméthylène, et
bis(aminoalkyl)poly(diméthylsiloxane).

2. Copolymère de polyamide selon la revendication 1, caractérisé en outre en ce que : le motif répétitif monomère de formule 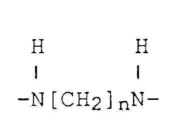 est dérivé de la 1,12-dodécanediamine.

3. Copolymère de polyamide selon la revendication 1, caractérisé en outre en ce que : les groupes répétitifs monomères de formule 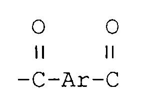 sont dérivés d'un ou de plusieurs des
acide téréphtalique,
dérivés d'acide téréphtalique,
acide 2,6-naphtalène dicarboxylique,
acide 4,4'-biphényl dicarboxylique, et
téréphtalate de diméthyle.

4. Copolymère de polyamide selon la revendication 1, caractérisé en outre en ce que : les polyoléfines à terminaison amine téléchélique sont au moins une polyoléfine choisie parmi les :
polyéthylène,
poly(éthylènepropylène), et
polyisobutylène, à terminaison amine.

5. Copolymère de polyamide selon l'une quelconque des revendications précédentes, caractérisé en outre en ce qu'il a un point de fusion cristalline compris entre 250 et 300°C.

6. Copolymère de polyamide selon l'une quelconque des revendications précédentes,
caractérisé en ce qu'il a un degré de cristallinité d'au moins 20 % lors d'une mesure par diffraction des rayons X.

7. Copolymère de polyamide selon l'une quelconque des revendications précédentes,
caractérisé en outre en ce qu'il a moins de 5 % en poids d'absorption d'eau lors d'une mesure selon les normes d'essai de l'ASTM D 570-81.

8. Copolymère de polyamide selon l'une quelconque des revendications précédentes, caractérisé en outre en ce qu'il comprend dans des quantités atteignant 30 moles % des constituants polymérisables totaux, des motifs comonomères choisis parmi :
des composés vinyliques, et
d'autres monomères qui pourraient être polymérisés directement pour donner une chaîne polymère linéaire.
